Europäisches Patentamt

European Patent Office

Office européen des brevets

(19)

(11) **EP 1 621 574 A1**

(12) **EUROPEAN PATENT APPLICATION**

(43) Date of publication:
01.02.2006 Bulletin 2006/05

(51) Int Cl.:
*C08K 3/08* (2006.01)    *C08J 3/205* (2006.01)

(21) Application number: 04425577.6

(22) Date of filing: 29.07.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **C.R.F. Società Consortile per Azioni**
**10043 Orbassano (Torino) (IT)**

(72) Inventors:
• **Martorana, Brunetto**
**10043 Orbassano (Torino) (IT)**

• **Pullini, Daniele**
**10043 Orbassano (Torino) (IT)**
• **Perlo, Pietro**
**10043 Orbassano (Torino) (IT)**
• **Carotenuto, Gianfranco**
**10043 Orbassano (Torino) (IT)**
• **Nicolais, Luigi**
**10043 Orbassano (Torino) (IT)**

(74) Representative: **Quinterno, Giuseppe et al**
**Jacobacci & Partners S.p.A.**
**Corso Emilia, 8**
**10152 Torino (IT)**

(54) **Thermochromic materials of the plasma absorption type, process for their preparation, and their applications**

(57) What is proposed is a composite thermochromic material comprising a matrix of polymeric material of the amorphous type, having a predetermined glass transition temperature (Tg), in which is incorporated an aggregate of metallic nanoparticles having a plasma absorption effect, so that the chromatic characteristics of the composite material at temperatures below the glass transition temperature (Tg) of the matrix are different from those at temperatures above it.

Fig. 1

**Description**

The present invention relates to thermochromics materials of the plasma absorption type, in other words materials which can modify their chromatic characteristics as a function of their temperature, as a result of the mechanism of interaction between the plasmon oscillations of metallic particles of nanometric size incorporated in them.

It is known that some metals, when reduced to particles of nanometric size, in other words less than 50 nm, show marked chromatic effects. The characteristic yellow colouring of nanoparticles of silver, the ruby red or violet colouring of nanoparticles of gold and the green colouring of nanoparticles of copper are well known and have been widely used since ancient times for colouring glass and ceramics.

The colours of these metals of nanometric size are generally bright and particularly intense (for example, the molar extinction coefficient of clusters of nanometric particles of silver is approximately 3 x $10^{11}M^{-1}cm^{-1}$); they are also absolutely stable over time, even after prolonged exposure to intense solar radiation.

These chromatic characteristics do not depend exclusively on the nature of the metal of nanoscopic size and its morphology (shape and dimensions), but are also dependent on the nature of the medium or matrix in which the nanoparticles are incorporated. In particular, when the refractive index of the medium containing these nanostructures is changed, variations of the chromatic tonality of the nanoparticles can be observed and can be significant.

The origin of the colouring of nanometric metals is related to the phenomenon of plasma resonance. This phenomenon was analysed quantitatively for the first time by G. Mie in 1908, by the application of the principles of electrodynamics to a spherical metallic particle isolated in a dielectric medium (vacuum).

Mie's physical and mathematical work yielded an analytical relationship which indicates, subject to the approximations of the model, the dependence of the absorption characteristics of the metallic particles on their size and on the optical properties (dielectric constants) of the particles and of the medium containing them. In particular, the extinction coefficient, k, is given by the following expression:

$$k = \left( \frac{9V\varepsilon_m^{3/2}}{c} \right) \left[ \frac{\omega \cdot \varepsilon(\omega)_2}{\left(\varepsilon(\omega)_1 + 2\varepsilon_m\right)^2 + \varepsilon(\omega)_2^2} \right]$$

$$(1)$$

where V is the volume of the particle, $\omega$ is the frequency of the electromagnetic wave, $\varepsilon_m$ is the dielectric constant of the medium containing the particles, and $\varepsilon_1$ and $\varepsilon_2$ are the real and imaginary parts of the dielectric constant of the metal.

The phenomenon of plasma absorption is related to the ability of metals to become polarized when exposed to electromagnetic radiation, owing to the presence of the conducting electrons, and to be brought to an excited state as a result of the absorption of the said radiation. Excitation can be described in a simple way by considering a uniform movement of the electron gas as a result of the application of the electrical field of the incident electromagnetic wave. The electron gas moves as a single unit with respect to the lattice of positive charges, and a movement of amplitude u of the electron gas creates a surface charge density $\rho=Q/S=uQ/V=une$, where n is the number of conducting electrons per unit of volume and e is the elementary charge ($e=1,6x10^{-19}$ C). This surface charge corresponds to an electrical field E within the metal equal to $E=\rho/\varepsilon_0=une/\varepsilon_0$ (Coulomb's theorem), which acts as a return force, tending to restore the electron "sea" to its equilibrium position. The equation of motion (F=ma) applied to a unit volume of the electron gas therefore becomes:

$$nm_e \frac{d^2u}{dt^2} = -neE = -\frac{n^2e^2u}{\varepsilon_0} \quad and \; therefore \quad \frac{d^2u}{dt^2} + \omega_p^2 \cdot u = 0 \qquad (2)$$

in which $\omega_p=(ne^2/\varepsilon_0 m_e)^{1/2}$, where $m_e$ is the mass of a single electron and $\varepsilon_0$ is the dielectric constant of the vacuum.

The relation (2) is the equation of motion of a simple harmonic oscillation of frequency $\omega_p$. The collective oscillation of an electron gas is called plasma oscillation, and therefore $\omega_p$ is defined as the plasma frequency.

Like all phenomena of the microscopic world, the oscillation of conducting electrons in the proximity of the metal surface is actually a quantized phenomenon. This quantized oscillation is called a plasmon, and it is excited by supplying to the system photons having an energy equal to integer multiples of the plasmon energy $E=(v+1/2)h\omega_p$, where h is Planck's constant, and v = 0, 1, 2, ...

Not all metals show plasma resonance when reduced to nanometric size. Metals such as iron, palladium, platinum, etc., are not coloured at all and show no absorption even in the UV region. The absence of plasmon resonance for these metals is due to the increase of the lifetime due to decay mechanisms such as relaxation of the conducting electrons, releases of radiation and conversion of the collective excitations into electron-hole pair excitations.

When clusters of Ag, Au or Cu nanoparticles are incorporated into a transparent isotropic dielectric material (e.g. glass, optical plastics, etc.), their chromatic characteristics can vary from those observed in a vacuum, owing to the different values of the dielectric constant, but they still appear with considerable intensity. These metal-dielectric composites are intensely coloured, but are characterized by high transparency, owing to the virtually total absence of light dispersion phenomena due to the nanometric sizes of the metallic inclusions.

These types of composite materials are suitable for numerous functional applications in the optical field, based on plasmon absorption, for example for making passive optical devices (e.g. optical filters, polarizers, dichroic elements, etc.), and the intensity of the colour can be varied simply by varying the concentration of the incorporated metallic nanoparticles.

Optical limiter devices based on the plasma absorption mechanism have frequently been produced by using isotropic transparent inorganic matrices (glasses), but polymeric matrices (optical plastics) can also be used with the considerable advantage of lower cost, increased lightness and easier workability.

Bio-sensors and devices for clinical tests (for immunology, toxicology, etc.) have also been produced; these incorporate clusters of nanometric particles of gold in suitable polymeric matrices.

One object of the present invention is to propose new plasma absorption materials characterized by a marked thermochromic effect, in other words materials which can modify their chromatic characteristics as a function of their temperature.

A further object of the invention is to propose a method for preparing and suggesting useful technical and technological applications of these materials.

These and other objects are achieved according to the invention with the solutions specified in the following claims.

Further characteristics and advantages of the invention will be made clear by the following detailed description, provided purely by way of example and without restrictive intent, with reference to the attached drawings, in which:

- Figure 1 is a graph which shows the variation of the specific volume $V_s$ of a thermochromic metal/polymer material with the variation of the temperature T;
- Figures 2a and 2b show a portion of a thermochromic material formed by incorporating a cluster of nanoparticles of silver in a polystyrene matrix; Figure 2a shows the portion of thermochromic material at 25°C and Figure 2b shows the same portion of thermochromic material at 120°C;
- Figure 3 is a photomicrograph made with a transmission electron microscope (TEM), showing the internal structure of a film of Ag/PS nanocomposite thermochromic material at ambient temperature;
- Figure 4 is a photograph showing the thermochromic material element of Figures 2a and 2b in a condition of use for the display of thermal gradients; and
- Figure 5 is a graph showing the UV-Vis spectrum of an Ag/PS nanocomposite thermochromic material according to the invention, at two different temperatures.

The thermochromic materials according to the invention can be produced by using various types of metallic nanostructures, provided that they are characterized by the plasma absorption phenomenon, such as clusters of nanoparticles of Ag or Au or Cu, their binary alloys (e.g. Au/Ag, Au/Pd, Au/Pt, etc.), incorporated in polymeric matrices of the amorphous type.

In general, a composite thermochromic material according to the invention comprises a matrix of amorphous polymeric material having a predetermined glass transition temperature Tg, in which matrix is incorporated an aggregate of nanoparticles of the types defined above, having a plasma absorption effect, in such a way that the chromatic characteristics of the composite material at temperatures below the glass transition temperature Tg are different from those at temperatures above it.

For example, a material comprising a polystyrene matrix incorporating clusters of nanoparticles of silver is capable of showing marked chromatic transitions, changing from dark brown or even black to straw-yellow as a result of the temperature.

The chromatic transition is generally distinct and is completed very quickly. The material acts as a kind of optical window, capable of blocking radiation of virtually the whole visible spectrum in given temperature conditions, and then becoming completely (or almost completely) transparent to light in other conditions.

In order to clarify the mechanism of the operation of these particular plasmon materials, it should be pointed out that the plasma absorption described by Mie's theory relates to a system of isolated particles, in other words particles located at such distances from each other that they have practically no interaction. When the metallic particles incorporated in a polymeric matrix are organized in macroaggregates (by the presence of functional groups capable of interacting at the surface, for example), the oscillations of the conducting electrons of the individual metallic particles eventually interact with each other because of the short distances between the particles. These particles can no longer be considered independent, and the optical properties of the resulting composite are no longer those corresponding to a dispersion of substantially isolated single particles.

The rigorous theoretical description of these systems appears to be complicated and depends on the particular topology of the aggregate. However, it is possible to give a simplified description of the behaviour of a system of interacting nanoparticles, considering the possible interactions of the dipoles produced within the aggregate of particles. The orientation of the dipoles produced in the individual particles of the aggregate can correspond to two distinct vibration modes, namely a longitudinal oscillation ($\rightarrow\rightarrow\rightarrow$) and a transverse oscillation ($\uparrow\uparrow\uparrow$). The excitation of the first vibration mode requires the absorption of a lower energy photon, while the excitation of the second vibration mode requires the absorption of a higher energy photon. The plasmon resonance is therefore separated into two different components (this process is known as "splitting"), these components being centred on frequencies dependent on the size and shape of the aggregate.

In the presence of different configurations or arrangements of the particles (non-uniform aggregates), a multiple "splitting" occurs, due to the fact that the low energy absorption (longitudinal plasmon oscillation) is highly dependent on the dimensions of the aggregate. In a system of variously interacting particles (aggregates of various dimensions) this may lead to absorption extending over the whole visible region of the spectrum.

As stated previously, in a composite thermochromic material according to the invention the aggregates of metallic nanoparticles are incorporated in a polymeric matrix. The inter-particle distance of these aggregates can therefore change significantly with a variation in temperature, since the specific volume of a polymer is particularly sensitive to the temperature.

The polymeric matrices used for producing thermochromic materials according to the invention are amorphous.

The glass transition temperature (Tg) of an amorphous polymer is a kind of energy threshold above which the macromolecular segments can slide with respect to each other. Consequently, below the glass transition temperature the polymer is hard and fragile, while it becomes soft and yielding above this value.

The thermal expansion law of an amorphous polymer is approximately linear, but its slope differs significantly according to whether the values are above or below $T_g$. In particular, below Tg there is a small change in volume as the temperature rises, but a very rapid expansion is observed when Tg is exceeded.

Correspondingly, if metallic nanoparticles with plasma absorption characteristics are incorporated into a polymeric material of this type, then passing through the glass transition temperature (Tg) causes a change from a system which undergoes multiple splitting of the plasmon absorption (at temperatures below the Tg of the matrix), and which therefore appears dark-coloured (black or brown) because of the extensive absorption occurring, to a system which consists of identical particles which are sufficiently isolated to absorb everything at the same frequency (temperatures above $T_g$).

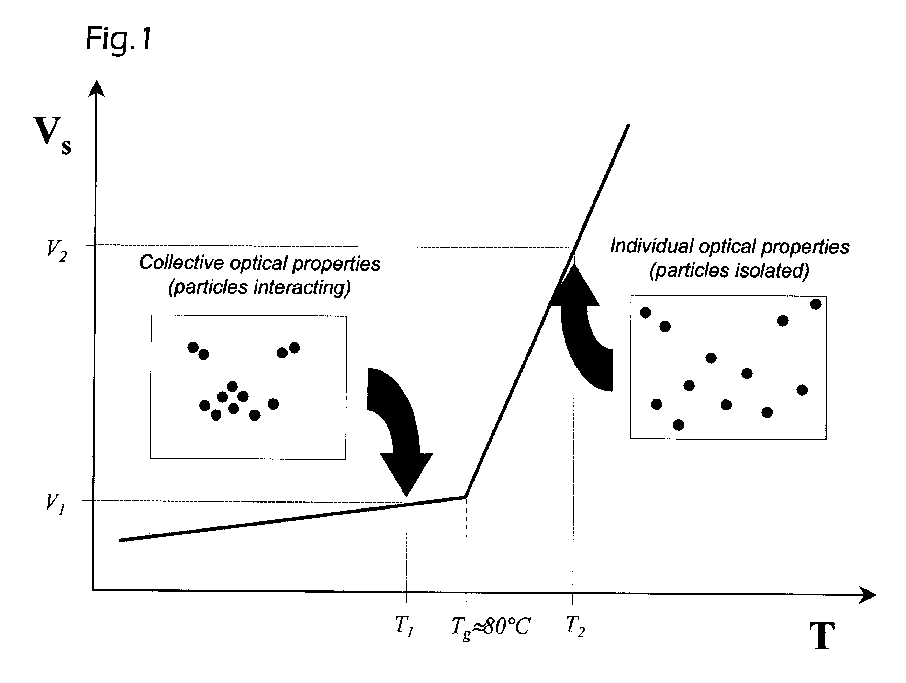

This behaviour is illustrated, in particular, in the graph of Figure 1, which shows the variation of the specific volume $V_s$ of a metal-polystyrene nanocomposite thermochromic material with the variation of the temperature T: below the Tg of polystyrene (approximately 80°C) the metallic nanoparticles are very close together and their plasmon oscillations interact, while at temperatures above Tg the nanoparticles are sufficiently remote from each other to be able to be considered as essentially isolated.

The distancing of the metallic nanoparticles which is required to cancel the interaction between their oscillations is modest and therefore takes place as soon as the Tg of the matrix polymer is exceeded.

The mechanism of operation described above therefore requires the formation of a particular topology, consisting of extensive aggregates of non-sintered nanoparticles, within the nanocomposite thermochromic material.

Although complex, this organization of the nanoparticles is easily achieved if the metallic particles are surface passivated, for example with a layer of alkane thiols ($Me_x(SR)_y$). This because, in this case, the passivated metallic particles are found to have a spontaneous tendency to organize themselves in superstructures, with the formation of non-uniform aggregates of various sizes. As regards the choice of materials and the preparation method, the following information will be given.

Silver has been found to be the most suitable metal for producing thermochromic materials. This is due to the fact that the absorption of the clusters of silver nanoparticles in the visible region is due exclusively to the phenomenon of plasma resonance, the inter-band transitions ($4d \rightarrow 5sp$) of the metallic silver being completely resolved by the plasma resonance and located in the near ultraviolet region.

Some metals which have plasma resonance, such as gold, also have this absorption superimposed on that produced by the inter-band transitions, resulting in extinction over a wide spectral range.

It should also be borne in mind that silver has a very narrow spectral absorption peak, located at the upper end of the visible region of the spectrum (approximately 410 nm) and therefore this material behaves optically as a low-pass filter.

Polymer films containing clusters of silver nanoparticles passivated with alkane thiols and organized in non-uniform macroaggregates can easily be prepared by the method of thermolysis of organic sulphur precursors in a polymeric matrix.

In this method, a thermolabile mercaptide precursor is dissolved in a polymer (e.g. polystyrene) to create a solid solution. This is then heat-treated to decompose the precursor, with the formation of metal atoms which subsequently separate into a nanometric metallic phase. Some of the disulphide produced simultaneously with the metal coats the clusters of metallic nanoparticles, giving rise to particular nanoscopic structures ("cluster compounds").

In the method described above, the mercaptide precursor used for metallizing the plastic is a normal metal alkane thiolate ($Me_x(SC_nH_{2n+1})_y$). In particular, amorphous polystyrene (Aldrich, $M_w$=230,000) is dissolved in chloroform, and silver dodecanethiolate ($AgSC_{12}H_{25}$) is added to the polymer solution prepared in this way, for example in a proportion of approximately 13% by weight of thiolate.

Silver dodecanethiolate is not a commercially available material and therefore has to be prepared by chemical synthesis, by reacting dodecanethiolate ($C_{12}H_{25}SH$, Aldrich) with silver nitrate in acetonitrile.

The silver dodecanethiolate is in the form of white crystalline powder, which can be separated by pump filtration, and must be protected from light in order to avoid photochemical decomposition.

Films of $PS/AgSC_{12}H_{25}$ (approximately 13% by weight of thiolate) can be produced by casting and are then subjected to heat treatment, for example on a plate heated to 150°C covered with aluminium foil. At the end of the heat treatment, the films are still hot and completely transparent, and straw-yellow in colour. This colouring is characteristic of nanometric silver, and is produced by the plasma resonance of silver ($\lambda_{max}$=410 nm).

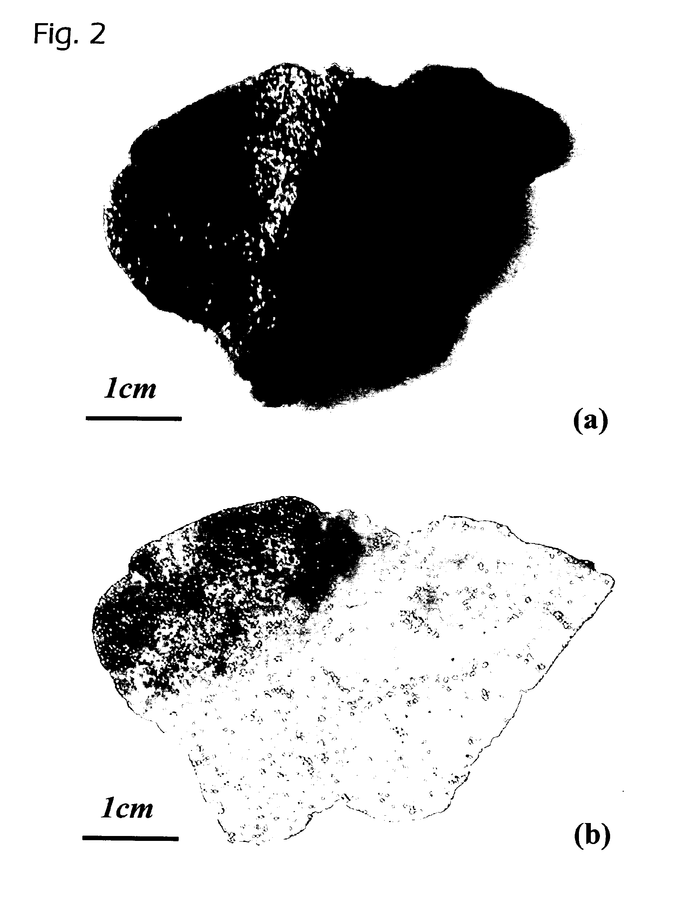

When these films are left to cool, with the aluminium foil removed from the plate, their colour rapidly becomes dark brown or black (Figure 2a).

The colour can be made to return to straw-yellow (Figure 2b) very quickly, simply by replacing the film on the plate and reheating it. The colour change is very fast and is always reversible. The phenomenon can be repeated a very large number of times, without any deterioration of the chromatic properties.

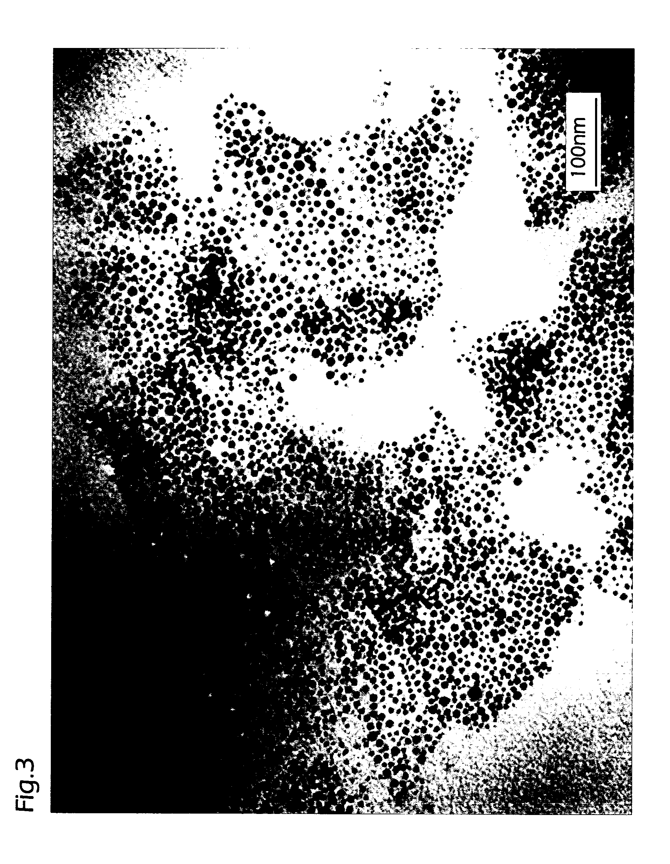

Figure 3 is a TEM micrograph showing the internal structure of a nanocomposite film made in this way at ambient temperature (specimen produced with 13% by weight of $AgAC_{12}H_{25}$, at a thermolysis temperature of 150°C). This micrograph shows the particular topology produced inside a film by the organization of the silver particles generated during the heat treatment. As can be seen, the silver nanoparticles form extensive non-uniform aggregates, of various sizes, within which these nanoparticles are not sintered at all, but are distributed uniformly and quite equally spaced. The equal spacing of the particles is probably due to the presence of disulphide molecules (a sub-product of the synthesis reaction) adsorbed on their surfaces in the form of thiolate.

$$n\ AgSR \xrightarrow{\ 150°C\ } Ag_n(SR)_m + \left(\frac{n-m}{2}\right) RS-SR \qquad (3)$$

The organic coating of the nanoparticles prevents their sintering, while it promotes their organization in macroaggregates, because of the ability of the normal alkyl chains to co-crystallize partially by interdigitation. However, it is also possible that the formation of the macroaggregates is promoted by the non-homogeneous distribution of the metallic precursor (silver thiolate) in the polymer base, because of its low compatibility with the polymer.

The particular microstructure described above is the ultimate cause of the thermochromicity of the material: heating the film produces an expansion of the whole aggregate, with consequent distancing of the particles to the extent required to change from an optical absorption of the collective type (interacting particles) to an absorption condition typical of single particles.

The range of applications for which this type of material is suitable is very wide.

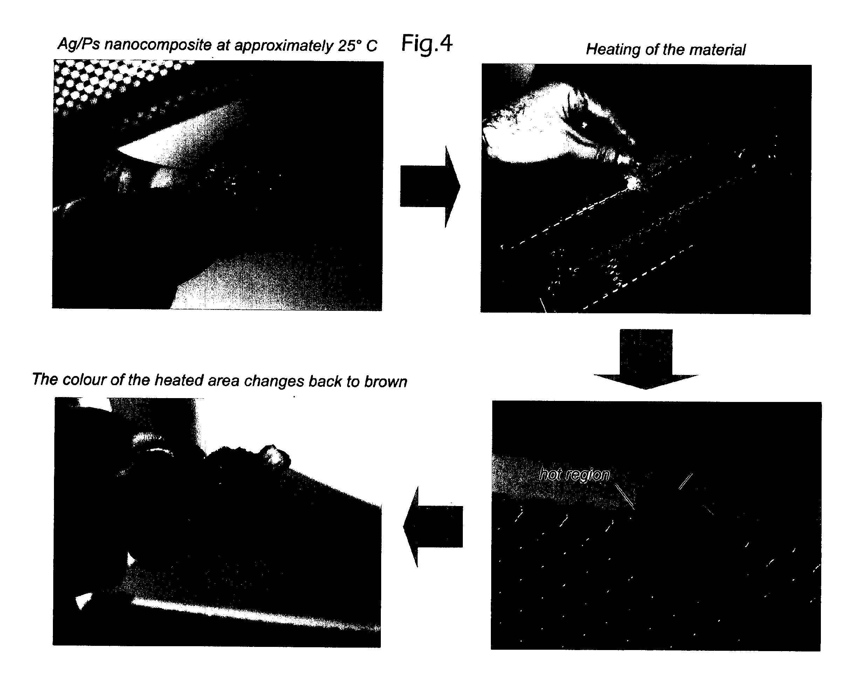

In Figure 4, a thermochromic film element of the aforementioned type is shown placed on a surface characterized by regions at different temperatures (an electric heater): the material shows in real time the thermal gradients present in the area on which it has been placed, providing a two-colour (yellow/brown) image corresponding to the cold and hot regions of the said area.

It will be noted that, when a nanocomposite thermochromic material is at ambient temperature, it is not transparent but opaque, due to the presence of extensive aggregates having dimensions comparable with the wavelength of visible light. This is because the aggregates have a maximum extension of the order of several hundred nanometres.

With reference to an element of the material described above, when this is heated until it takes on the characteristic yellow colouring, it also becomes transparent. This is due to the "dissolution" of the aggregates present, with consequent complete removal of the light diffusing effects caused by them. Thermochromic paints produced according to the invention can therefore be considered for use in the simple real-time monitoring of systems which can be subject to hazardous overheating when in use (for example, the production of sheaths for high-voltage electrical cables), and also for providing information on the mechanical performance of plastic components which operate in extreme temperature conditions.

Although polystyrene is only one of the polymers which can potentially be used to produce nanocomposite thermochromic materials according to the invention, its choice as the matrix for the incorporation of the clusters of metallic nanoparticles is convenient because it has a glass transition temperature of approximately 80°C. This temperature generally represents a limit value for the operation of numerous types of electrical and electro-mechanical equipment, such as actuators and servocontrollers based on hydraulic liquid (e.g. hydraulic brakes), and also water-filled heating radiators, etc.

The precise value of the temperature of the occurrence of the colour change of a nanocomposite film with a polystyrene matrix can be controlled by varying the molecular weight of the polystyrene. This is because the glass transition temperature of polystyrene is essentially proportional to its molecular weight. It should also be noted that polystyrene is a standard material used for calibrating chromatography columns for exclusion chromatography (GPC, Gel Permeation Chromatography), and therefore a very wide range of molecular weights is commercially available for this type of polymer.

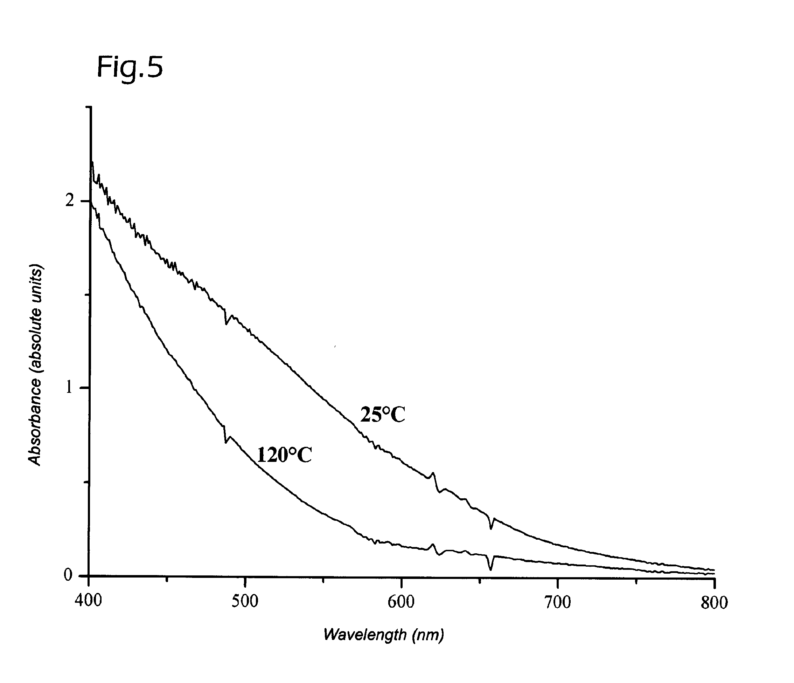

Figure 5 shows the absorption spectrum of the nanocomposite thermochromic material produced in the form of a PS/AgSC$_{12}$H$_{25}$ film. This absorption spectrum was found for two different temperatures, namely 25°C and 120°C, using a UV-Vis-NIR spectrophotometer (HP-8453 UV-Vis Spectrophotometer). The spectrum shows the characteristic plasmon absorption band of nanoscopic silver at high temperature, and a wide absorption band which covers the whole visible region of the spectrum at ambient temperature (approximately 25°C).

Concerning the method of preparing the thermochromic materials described above, it will be noted that the same preparation procedure can also be used to produce similar plasmon devices based on clusters of nanoparticles of silver and matrices of polymethyl methacrylate (PMMA), polycarbonate (PC) and polyvinyl acetate (PVA). The preparation method described above is therefore a general approach, particularly useful for the preparation of plasmon devices for optical sensor apparatus.

Clearly, provided that the principle of the invention is retained, the forms of application and the details of construction can be varied widely from what has been described and illustrated purely by way of example and without restrictive intent, without thereby departing from the scope of protection of the invention as defined by the attached claims.

**Claims**

1. Composite thermochromic material comprising a matrix of polymeric material of the amorphous type, having a predetermined glass transition temperature (Tg), in which is incorporated an aggregate of metallic nanoparticles having a plasma absorption effect, so that the chromatic characteristics of the composite material at temperatures below the glass transition temperature (Tg) of the matrix are different from those at temperatures above it.

2. Composite thermochromic material according to Claim 1, in which the said aggregate comprises non-sintered metallic nanoparticles.

3. Composite thermochromic material according to Claim 2, in which the said metallic nanoparticles are surface passivated.

4. Composite thermochromic material according to Claim 3, in which the said metallic nanoparticles have a surface layer of an alkane thiolate.

5. Composite thermochromic material according to any one of the preceding claims, in which the said aggregate comprises nanoparticles of Ag or Au or Cu, and/or their binary alloys.

6. Composite thermochromic material according to any one of the preceding claims, in which the said aggregate comprises bimetallic or polymetallic nanoparticles with concentric layers.

7. Composite thermochromic material according to any one of the preceding claims, in which the said aggregate comprises metal-ceramic nano-heterostructures.

8. Composite thermochromic material according to any one of the preceding claims, made in the form of a sheet or film.

9. Composite thermochromic material according to any one of the preceding claims, in which the said polymeric matrix consists of polystyrene, polymethyl methacrylate, polycarbonate or polyvinyl acetate.

10. Process for preparing a composite thermochromic material according to any one of the preceding claims, in particular in the form of a sheet or film, by thermolysis of organic sulphur precursors in a polymeric matrix.

11. Process according to Claim 10, in which a thermolabile mercaptide precursor is dissolved in a polymer in such a way as to form a solid solution, which is then heat treated in such a way as to decompose the said precursor with the formation of metal atoms which are separated into a nanometric metallic phase.

12. Process according to Claim 11, in which a normal metallic alkane thiolate is used as the mercaptide precursor.

13. Process according to Claim 12, in which an amorphous polymer is dissolved in chloroform to form a polymeric solution to which is added a metallic dodecanethiolate.

14. Process according to Claim 13, in which silver or gold dodecanethiolate is added to the said polymer solution.

Fig.1

$V_s$

Individual optical properties
(particles isolated)

Collective optical properties
(particles interacting)

$V_2$

$V_1$

$T_1$   $T_g \approx 80°C$   $T_2$

$T$

Fig. 2

1cm

**(a)**

1cm

**(b)**

Fig.3

Fig.4

Heating of the material

Ag/Ps nanocomposite at approximately 25° C

The colour of the heated area changes back to brown

hot region

Fig.5

Figure 5: Absorbance (absolute units) versus Wavelength (nm) showing curves labeled 25°C and 120°C.

**European Patent Office**

## EUROPEAN SEARCH REPORT

Application Number

EP 04 42 5577

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CAROTENUTO G ET AL: "A UNIVERSAL METHOD FOR THE SYNTHESIS OF METAL AND METAL SULFIDE CLUSTERS EMBEDDED IN POLYMER MATRICES"<br>JOURNAL OF MATERIALS CHEMISTRY, THE ROYAL SOCIETY OF CHEMISTRY, CAMBRIDGE, GB,<br>vol. 13, no. 12, 2003, pages 2927-2930,<br>XP008034220<br>ISSN: 0959-9428<br>* page 2927 - page 2930 *<br>----- | 1-14 | C08K3/08<br>C08J3/205 |
|  |  |  | TECHNICAL FIELDS SEARCHED (Int.Cl.7)<br><br>C08K<br>C08J |

The present search report has been drawn up for all claims

| Place of search | Date of completion of the search | Examiner |
|---|---|---|
| The Hague | 4 February 2005 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................................

& : member of the same patent family, corresponding document

EPO FORM 1503 03.82 (P04C01)